# FASCICULE DE BREVET EUROPEEN

(11) **EP 1 399 925 B1**
(45) Date de publication et mention de la délivrance du brevet: **26.07.2006**
(21) Numéro de dépôt: 02747492.3
(22) Date de dépôt: 31.05.2002
(51) Int. Cl.: G21C 7/08, G21C 9/02, G21C 17/017

(54) **PROCEDE ET DISPOSITIF DE RESTAURATION DU TEMPS DE CHUTE D'AU MOINS UNE GRAPPE DE COMMANDE DE REGLAGE DE LA REACTIVITE DANS LE COEUR D'UN REACTEUR NUCLEAIRE REFROIDI PAR DE L'EAU LEGERE**
VERFAHREN UND VORRICHTUNG ZUR WIEDERHERSTELLEUNG DER FALLZEIT EINES STEUERSTABS ZUR STEUERUNG DER REAKTIVITÄT IM REAKTORKERN EINES LEICHTWASSERGEKÜHLTEN KERNREAKTORS
METHOD AND DEVICE FOR RESTORING THE FALL-TIME OF AT LEAST ONE CONTROL CLUSTER FOR REGULATING REACTIVITY IN THE CORE OF A LIGHT-WATER-COOLED NUCLEAR REACTOR

(30) Priorité: 14.06.2001 FR 0107811
(43) Date de publication de la demande: 24.03.2004
(73) Titulaire: Framatome ANP, 92400 Courbevoie (FR)
(72) Inventeur: BARBE, Gérard, F-92500 Rueil Malmaison (FR); BLOCQUEL, Alain, F-69750 Dardilly (FR); HERTZ, Dominique, F-69110 Saint Foy les Lyon (FR); MOREL, Gilles, F-71640 Saint Mard de Vaux (FR)
(74) Mandataire: Bouget, Lucien
(86) Numéro de dépôt international: PCT/FR2002/001853
(87) Numéro de publication internationale: WO 2002/103707

(56) Documents cités:
- EP-A- 0 081 429
- EP-A- 0 666 447
- DATABASE WPI Section Ch, Week 198851 Derwent Publications Ltd., London, GB; Class K05, AN 1988-366401 XP002190510 & JP 63 060874 B (GENSHI NENRYO KOGYO KK), 25 novembre 1988 (1988-11-25)
- DATABASE WPI Section Ch, Week 198721 Derwent Publications Ltd., London, GB; Class K05, AN 1987-146713 XP002190511 & JP 62 083692 A (TOSHIBA KK), 17 avril 1987 (1987-04-17)
- PATENT ABSTRACTS OF JAPAN vol. 1997, no. 12, 25 décembre 1997 (1997-12-25) & JP 09 206861 A (KYOSHIN KOGYO KK), 12 août 1997 (1997-08-12)

## Description

L'invention concerne un procédé et un dispositif de restauration du temps de chute d'au moins une grappe de commande de réglage de la réactivité dans le coeur d'un réacteur nucléaire refroidi par de l'eau légère. En particulier, l'invention concerne un procédé et un dispositif de restauration du temps de chute des grappes de commande d'un réacteur nucléaire à eau sous pression.

Les réacteurs nucléaires à eau sous pression comportent des assemblages de combustible de forme prismatique juxtaposés constituant le coeur du réacteur dans lequel se produit le dégagement de chaleur fourni par la fission des pastilles d'uranium enrichi contenues dans les crayons constituant les assemblages.

La régulation ou l'arrêt de la réaction nucléaire fournissant la production de chaleur qui est transmise au fluide caloporteur constitué par de l'eau sous pression sont réalisés par des grappes de réglage constituées chacune par un faisceau de vingt-quatre crayons absorbants contenant du carbure de bore qui absorbe les neutrons. Les crayons absorbants des grappes de réglage sont introduits dans vingt-quatre tubes-guides d'un assemblage de combustible disposés à l'intérieur du réseau de crayons de combustible de l'assemblage, ces tubes-guides constituant également une partie de l'ossature de l'assemblage. Cette ossature comporte des grilles fixées sur les tubes-guides et délimitant un réseau dans lequel sont placés et maintenus les crayons combustibles et les tubes-guides.

Les grappes de réglage sont déplacées dans le coeur du réacteur suivant sa direction verticale, de manière à réguler le réacteur nucléaire, en fonction de l'appauvrissement de l'uranium enrichi des pastilles contenues dans les crayons combustibles et des variations de la demande d'énergie du réseau.

Le déplacement des grappes de contrôle suivant la direction axiale du tube-guide des assemblages de combustible est réalisé par des mécanismes de commande placés sur le couvercle de la cuve du réacteur contenant le coeur.

Les grappes de réglage sont guidées, au-dessus du coeur, par des tubes de guidage faisant partie des équipements internes supérieurs du réacteur et disposés dans l'alignement des assemblages de combustible dans lesquels on introduit les grappes de réglage.

Les tubes de guidage des équipements internes supérieurs du réacteur comportent des éléments de guidage définissant des canaux de guidage ayant des axes verticaux disposés dans le prolongement d'axes verticaux de tubes-guides d'assemblages de combustible dans lesquels on déplace les crayons absorbants d'une grappe de réglage. Chacun des tubes-guides est disposé à l'aplomb d'un assemblage de combustible et permet de guider une grappe de réglage qui est introduite dans les tubes-guides de l'assemblage de combustible.

Les équipements internes supérieurs du réacteur comportent, à leur partie inférieure, une plaque supérieure de coeur destinée à venir reposer dans une position horizontale, sur la partie supérieure des assemblages de combustible du coeur, à l'intérieur de la cuve du réacteur.

Chacun des tubes de guidage des équipements internes supérieurs comporte des éléments de guidage ayant des ouvertures ou canaux qui sont alignés suivant la direction axiale de déplacement d'un crayon absorbant, dans le prolongement de l'axe d'un tube-guide d'un assemblage de combustible.

Une partie de ces éléments de guidage disposés dans la partie supérieure du tube-guide sont constitués par des cartes de guidage traversées par des ouvertures de passage des crayons absorbants de la grappe de réglage. Ces éléments sont désignés comme éléments de guidage discontinus. D'autres éléments de guidage constituant des éléments de guidage continus sont disposés dans la partie inférieure des équipements supérieurs, c'est-à-dire dans la partie des équipements internes voisine de la plaque supérieure de coeur destinée à venir reposer sur les assemblages de combustible du coeur. Ces éléments de guidage continus sont constitués par des fourreaux et des tubes fendus assurant chacun, respectivement, le guidage de deux crayons absorbants ou d'un seul crayon absorbant.

La grappe de réglage comporte une partie supérieure en forme de croisillon sur laquelle sont fixés les crayons absorbants, suivant des bras de direction radiale qui sont amenés à se déplacer à l'intérieur des fourreaux et des tubes fendus dans la direction axiale, ces fourreaux ou tubes fendus étant accessibles depuis la partie centrale du tube-guide.

Les grappes de réglage se déplacent de manière fréquente, si bien qu'après un cycle de fonctionnement, les gaines des crayons absorbants des grappes de réglage peuvent présenter une certaine usure. Après un temps de fonctionnement plus ou moins long, le frottement des gaines des crayons absorbants des grappes de réglage dans les éléments de guidage peut entraîner une usure et plus spécialement une ovalisation de l'alésage des éléments de guidage qui sont reliés entre eux par des ouvertures permettant le passage des bras radiaux du pommeau sur lequel sont fixés les crayons absorbants. Le phénomène d'usure peut être amplifié de façon qu'il produise une usure prématurée des éléments de guidage, sous l'effet des vibrations des gaines des crayons absorbants à l'intérieur des cartes de guidage et des éléments de guidage continus, engendrées par le passage du fluide de refroidissement, notamment lors de transitoires.

De manière à réduire très rapidement la réactivité du coeur d'un réacteur nucléaire à eau sous pression, par exemple pour commander un arrêt d'urgence du réacteur, on provoque la chute des grappes de réglage en position d'insertion maximale à l'intérieur des assemblages du coeur, en relâchant les moyens reliant les grappes de réglage aux mécanismes de déplacement. De manière à garantir un fonctionnement sûr du réacteur nucléaire et un arrêt rapide de la réaction dans le coeur du réacteur nucléaire, il est nécessaire d'obtenir et de maintenir au cours d'un fonctionnement de longue durée du réacteur nucléaire un temps de chute des grappes de réglage le plus faible possible.

On a constaté, au cours de l'exploitation de certaines centrales à eau sous pression, que le temps de chute des grappes de commande peut augmenter de manière sensible pour atteindre, dans certains cas, des valeurs situées au-dessus du seuil maximal admissible pour le temps de chute (par exemple un temps limite de 2,05 secondes dans le cas des réacteurs nucléaires à eau sous pression de type 900 MWe, avant l'entrée des crayons dans un amortisseur hydraulique situé à la partie inférieure de l'assemblage de combustible et assurant l'amortissement et l'arrêt de la grappe en position d'insertion maximale. Ce défaut est surtout sensible pour les grappes de réglage situées à la périphérie du coeur du réacteur nucléaire, au voisinage de tubulures de sortie de l'eau de refroidissement de la cuve du réacteur.

Une des causes possibles de cette augmentation du temps de chute des grappes de réglage au cours de l'utilisation du réacteur nucléaire est un effet de plaquage hydraulique des crayons absorbants des grappes contre les parois des canaux de guidage des tubes-guides par le flux d'eau de refroidissement, cet effet de plaquage augmentant avec l'usure des guidages continus des tubes de guidage des équipements internes supérieurs. En effet, l'usure des canaux de guidage continus par les grappes de crayons absorbants produit une sorte de rodage des canaux qui se traduit par une augmentation de l'effet de plaquage hydraulique des crayons absorbants contre les tubes-guides et par une augmentation du frottement introduisant un freinage se traduisant par une augmentation du temps de chute des grappes.

Dans le cas des réacteurs nucléaires fabriqués actuellement, on effectue en usine, sur les tubes de guidage des équipements internes supérieurs, un élargissement local des canaux de guidage continus dans plusieurs zones (par exemple trois zones) suivant la longueur du canal de guidage continu. Cet élargissement local du canal de guidage continu dans des directions radiales, qui peut être effectué par expansion hydraulique, permet de diminuer ou d'éliminer l'effet de plaquage hydraulique des grappes de réglage dû à l'usure des canaux, pendant le fonctionnement du réacteur nucléaire. On préserve ainsi les conditions relatives au temps de chute des grappes de réglage au cours du temps, pendant le fonctionnement du réacteur nucléaire.

Dans le cas des centrales nucléaires en activité, on a envisagé de remplacer les tubes de guidage usagés des équipements internes supérieurs par des tubes neufs, mais le coût de l'intervention d'une part et la difficulté de réaliser cette intervention ainsi que le transport, le traitement et l'entreposage des tubes de guidage activés dont on a assuré le remplacement, d'autre part, rendent cette technique de remplacement des tubes de guidage peu attrayante pour l'exploitant de centrale nucléaire.

Le but de l'invention est donc de proposer un procédé de restauration du temps de chute d'au moins une grappe de réglage de la réactivité dans le coeur d'un réacteur nucléaire refroidi par de l'eau légère comportant, au-dessus du coeur constitué par des assemblages de combustible juxtaposés placés dans une cuve du réacteur nucléaire, dans une disposition telle que les tubes-guides des assemblages de combustible sont disposés verticalement, des équipements internes supérieurs reposant sur la partie supérieure des assemblages de combustible du coeur par l'intermédiaire d'une plaque supérieure de coeur dans une disposition horizontale et comprenant un ensemble de tubes de guidage verticaux utilisés chacun pour le guidage d'une grappe de commande constituée par un faisceau de crayons absorbants parallèles entre eux et comportant une pluralité de canaux de guidage des crayons absorbants, parallèles entre eux situés dans l'alignement axial des tubes-guides d'un assemblage de combustible et comprenant une partie d'extrémité voisine de la plaque supérieure de coeur réalisée sous la forme d'un canal de guidage continu, ce procédé permettant d'obtenir un temps de chute des grappes de commande conforme aux conditions de sûreté de fonctionnement du réacteur nucléaire, même après un certain temps de fonctionnement du réacteur nucléaire se traduisant par une usure des canaux des tubes de guidage des équipements internes supérieurs, sans nécessiter le remplacement des tubes de guidage par des tubes neufs.

Dans ce but, on réalise, dans une piscine du réacteur nucléaire, après arrêt et refroidissement du réacteur à la suite d'une période de fonctionnement, sur au moins un tube de guidage des équipements internes supérieurs activés, un élargissement des canaux de guidage du tube de guidage, dans au moins une zone des canaux de guidage continu.

Afin de bien faire comprendre l'invention, on va décrire, en se référant aux figures jointes en annexe, les équipements internes supérieurs d'un réacteur nucléaire à eau sous pression et un exemple de mise en oeuvre du procédé de restauration du temps de chute selon l'invention sur ces équipements internes supérieurs.
La figure 1 est une vue en perspective éclatée de la cuve d'un réacteur nucléaire à eau sous pression.
La figure 2 est une vue en coupe par un plan de symétrie verticale, de la cuve d'un réacteur nucléaire à eau sous pression.
La figure 3 est une vue en élévation d'équipements internes supérieurs d'un réacteur nucléaire à eau sous pression.
La figure 4 est une vue en élévation et en coupe partielle d'un assemblage de combustible du coeur d'un réacteur nucléaire à eau sous pression, en position de service dans la cuve du réacteur nucléaire.
La figure 5 est une vue en élévation d'un tube de guidage des équipements internes supérieurs d'un réacteur nucléaire à eau sous pression.
Les figures 6A, 6B et 6C sont des vues en coupe transversale du tube-guide représenté sur la figure 5, respectivement suivant A-A, B-B et C-C de la figure 5.
La figure 7 est une vue en coupe transversale à plus grande échelle des éléments de guidage continus du tube-guide tel que représenté sur la figure 6C.
La figure 8 est une vue agrandie du détail 8 de la figure 7, montrant le plaquage hydraulique d'un crayon absorbant dans un canal de guidage continu.
La figure 9 est une vue en coupe transversale d'un fourreau de guidage continu du tube-guide, après mise en oeuvre sur le fourreau de guidage continu d'un procédé de restauration suivant l'invention.
La figure 10 est une vue en coupe axiale agrandie de l'un des canaux de guidage du fourreau de guidage continu représenté sur la figure 9.
La figure 11 est une vue en élévation d'un dispositif d'usinage par électroérosion utilisé pour la mise en oeuvre du procédé suivant l'invention.
La figure 12 est une vue en coupe transversale d'une partie de l'outillage représenté sur la figure 11, en position dans un tube de guidage des équipements internes supérieurs.
La figure 13 est une vue en élévation latérale d'une partie du dispositif représenté sur la figure 11.
La figure 14 est une vue en coupe suivant 14-14 de la figure 13.
La figure 15 est une vue en élévation et en coupe verticale d'une variante de réalisation d'une partie du dispositif représenté sur la figure 11.
La figure 16 est une vue en élévation et en coupe d'un détail du dispositif représenté sur la figure 11 montrant les moyens d'avancement des électrodes d'électroérosion du dispositif représenté sur la figure 11.
La figure 17 est une vue partiellement en coupe d'une électrode d'usinage par électroérosion des canaux de guidage des tubes-guides.

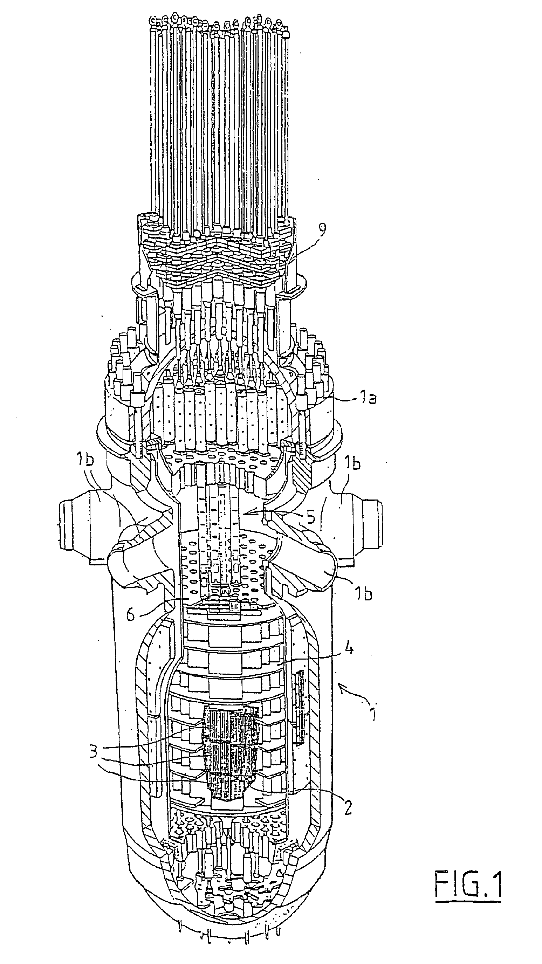

Sur la figure 1, on a représenté la cuve d'un réacteur nucléaire à eau sous pression désignée par le repère 1.

A l'intérieur de la cuve 1 du réacteur nucléaire est disposé le coeur 2 constitué par des assemblages de combustible 3 de forme prismatique droite placés de manière juxtaposée de telle sorte que l'axe longitudinal des assemblages de combustible soit vertical.

Le coeur 2 du réacteur est disposé à l'intérieur des équipements internes inférieurs du réacteur nucléaire qui comportent en particulier le cloisonnement 4 du coeur ; les équipements internes supérieurs 5 reposent sur la partie supérieure des assemblages du coeur, par l'intermédiaire d'une plaque supérieure de coeur 6.

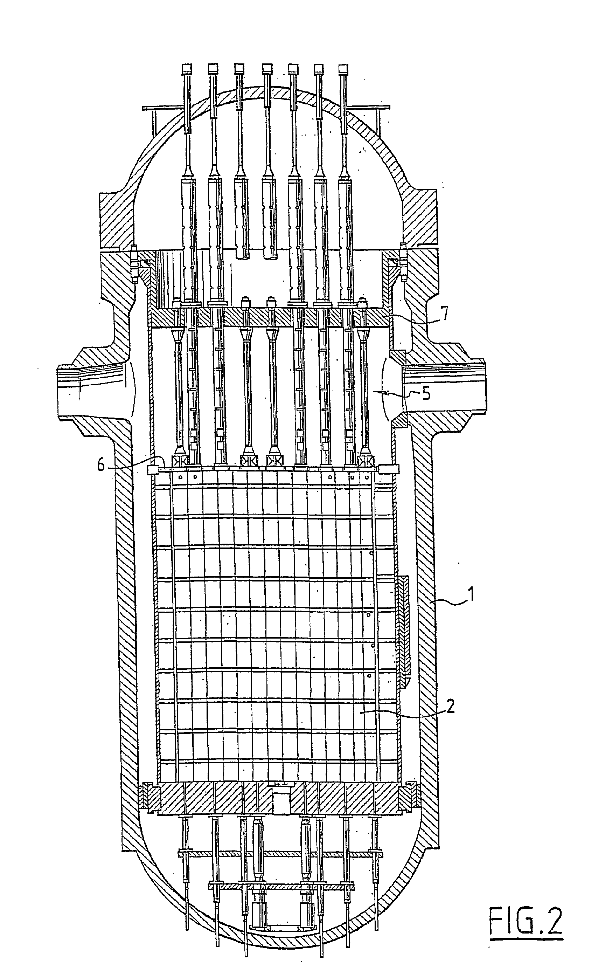

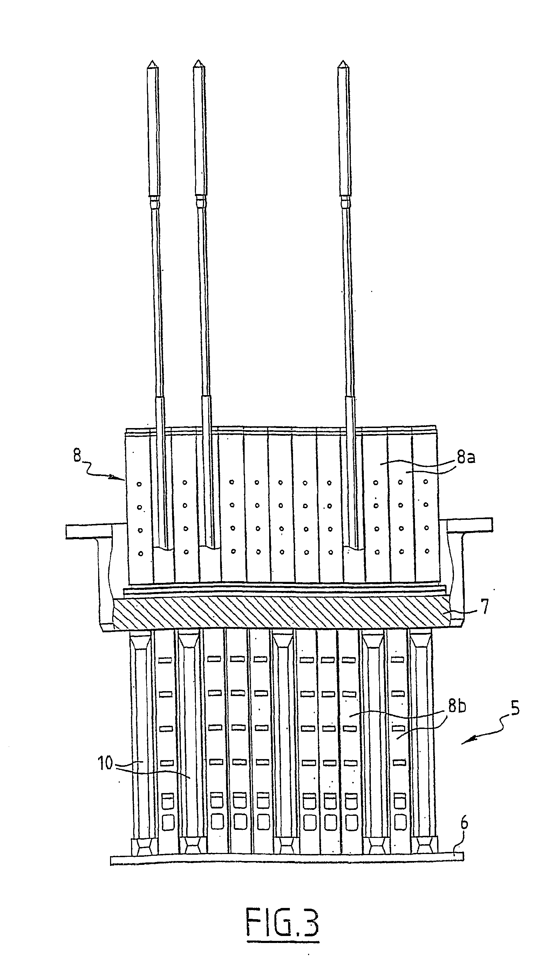

Comme il est visible sur la figure 1 ainsi que sur les figures 2 et 3, les équipements internes supérieurs 5 comportent une plaque supérieure 7 parallèle à la plaque supérieure de coeur 6 constituant la partie inférieure des équipements internes supérieurs qui est réalisée de manière à assurer la fixation des équipements internes supérieurs à l'intérieur de la cuve dans laquelle est également suspendue une enveloppe renfermant le cloisonnement 4 et le coeur 2 du réacteur, à l'extrémité inférieure de laquelle est fixée une plaque inférieure de support des assemblages du coeur.

Les équipements internes supérieurs 5 comportent, au-dessus de la plaque supérieure 7 des équipements internes supérieurs, des tubes de guidage supérieurs 8a à section circulaire et, entre la plaque supérieure 7 des équipements internes supérieurs 5 et la plaque supérieure de coeur 6, des tronçons 8b des tubes de guidage à section sensiblement carrée à angles arrondis.

Chacun des tronçons 8b de tubes de guidage est placé dans l'alignement axial d'un tube de guidage 8a, le tube supérieur 8a et le tronçon de tube 8b correspondant constituant un tube de guidage 8 des équipements internes supérieurs permettant le déplacement dans la direction verticale d'une grappe de réglage de la réactivité dans le coeur du réacteur nucléaire, reliée à une tige de suspension et de déplacement, dont le déplacement dans la direction verticale est assuré par un mécanisme 9 situé au-dessus du couvercle 1 a de la cuve 1 (voir figure 1).

Entre la plaque supérieure 7 des équipements internes supérieurs 5 et la plaque supérieure de coeur 6, sont placés, en plus des tronçons 8b des tubes de guidage 8, des colonnes entretoises 10 assurant le maintien et l'écartement de la plaque supérieure de coeur 6 par rapport à la plaque supérieure des équipements internes 7.

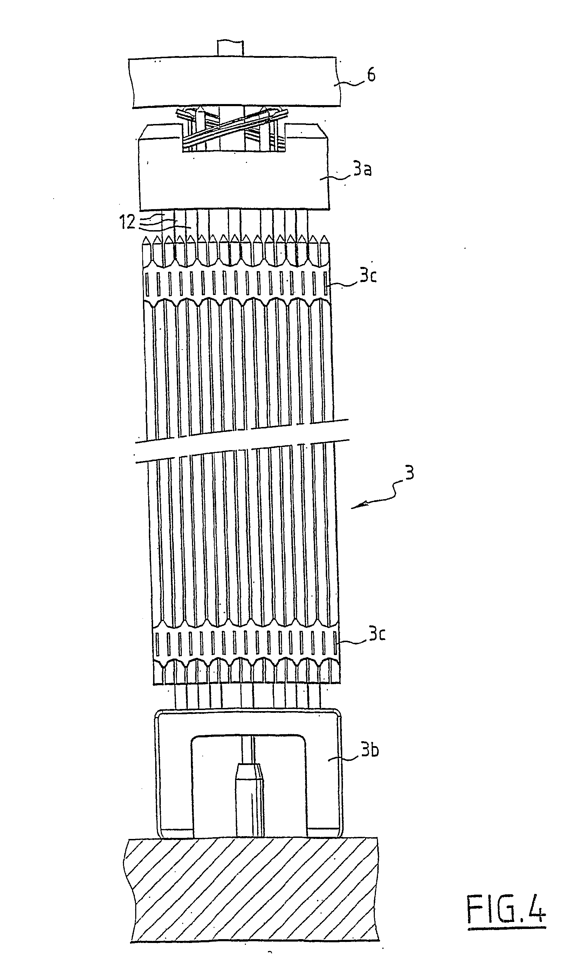

Sur la figure 4, on a représenté un assemblage de combustible 3 en position à l'intérieur du coeur 2 du réacteur nucléaire, l'assemblage de combustible 3 reposant par l'intermédiaire d'un embout inférieur 3b sur la plaque de support de coeur et comportant un embout supérieur 3a sur lequel vient en appui, par l'intermédiaire de ressorts à lame, la plaque supérieure de coeur 6.

L'assemblage de combustible 3 comporte une ossature constituée par des grilles-entretoises 3c réparties suivant la direction axiale verticale de l'assemblage de combustible et comportant des cellules dans lesquelles sont introduits et maintenus les crayons de combustible de l'assemblage.

Certaines des cellules des grilles entretoises 3c assurent le passage et la fixation de tubes-guides 12 présentant une longueur supérieure aux longueurs des crayons de combustible, de telle sorte que les tubes-guides 12 de l'assemblage de combustible présentent des parties en saillie à la partie supérieure et à la partie inférieure du faisceau de crayons de l'assemblage de combustible qui sont fixés aux embouts d'extrémité 3a et 3b, respectivement.

Les tubes-guides peuvent constituer à la fois des éléments d'une ossature de l'assemblage de combustible et des éléments de guidage de direction verticale de crayons absorbants d'une grappe de réglage de la réactivité du coeur du réacteur nucléaire.

Une partie des assemblages du coeur est disposée dans l'alignement des tubes de guidage des équipements internes supérieurs de manière à recevoir une grappe de réglage constituée par un faisceau de crayons absorbants, pour régler la réactivité dans le coeur du réacteur nucléaire. Les crayons absorbants sont guidés à l'intérieur de l'assemblage de combustible par les tubes-guides 12 destinés à recevoir chacun un crayon absorbant d'une grappe de réglage, avec un faible jeu radial.

A l'intérieur des tubes de guidage 8 des équipements internes supérieurs, les crayons absorbants des grappes de réglage sont guidés par des éléments de guidage dans le prolongement axial des tubes-guides des assemblages de combustible recevant les grappes de réglage.

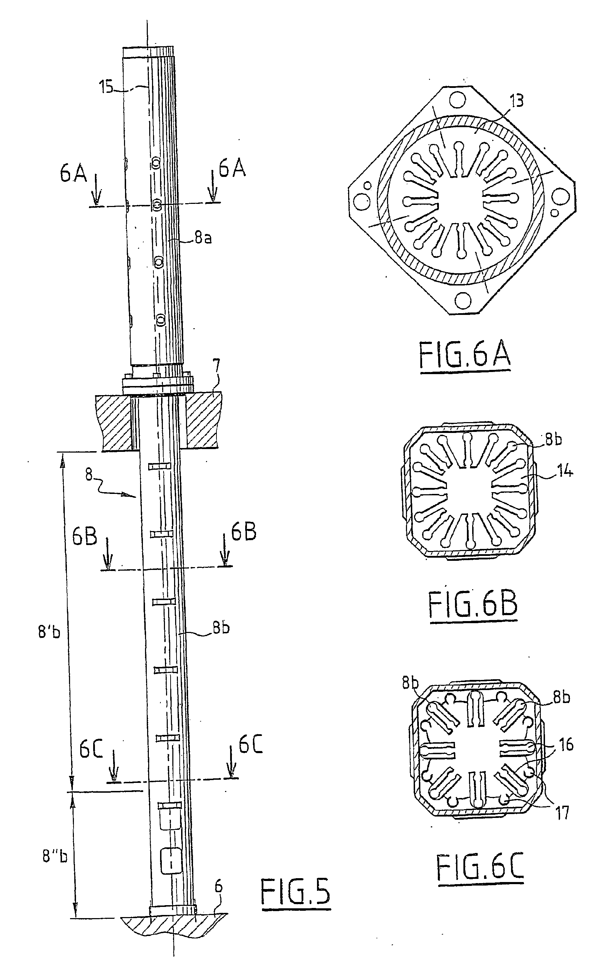

Sur la figure 5, on a représenté un tube de guidage 8 des équipements internes supérieurs 5 du réacteur nucléaire.

Le tube de guidage supérieur 8a disposé au-dessus de la plaque supérieure 7 des équipements internes supérieurs 5 renferme des éléments de guidage discontinus constitués par des plaques à section circulaire telles que 13 visibles sur la figure 6A. Chacune des plaques de guidage discontinu 13 d'une grappe de réglage de la réactivité du réacteur nucléaire comporte un évidement central et des ouvertures de direction radiale débouchant à leur extrémité interne dans la cavité centrale de la carte de guidage.

Chacune des ouvertures de direction radiale comporte à son extrémité située vers l'extérieur, c'est-à-dire à son extrémité la plus éloignée de la partie centrale de la carte de guidage dans laquelle passe l'axe du tube de guidage, une ouverture sensiblement circulaire de guidage d'un crayon absorbant d'une grappe de guidage. Certaines des ouvertures de direction radiale et plus précisément une ouverture sur deux porte de plus, à son extrémité intérieure voisine de la cavité centrale de la carte de guidage 13, une seconde zone de guidage sensiblement circulaire d'un crayon absorbant de la grappe de réglage de la réactivité du coeur.

La carte de guidage comporte vingt-quatre ouvertures permettant chacune le guidage d'un crayon absorbant disposé de manière à se trouver dans l'alignement axial des tubes-guides d'un assemblage de combustible. Chacune des ouvertures de guidage d'un crayon absorbant communique avec la cavité centrale de la carte de guidage 13, par l'intermédiaire d'une ouverture de direction radiale.

On peut ainsi assurer le déplacement, à l'intérieur des tubes 8a renfermant les cartes de guidage discontinu 13, d'une grappe de crayons absorbants fixés à l'une de leurs extrémités à un pommeau comportant des bras de direction radiale sur lesquels sont fixés les crayons absorbants de la grappe de réglage. Le pommeau de la grappe de réglage et les crayons absorbants peuvent se déplacer dans la direction axiale 15 du tube de guidage 8, respectivement à l'intérieur de la cavité centrale et dans les ouvertures de guidage circulaires.

Le tronçon de tube de guidage 8b à section sensiblement carrée, visible sur les figures 6B et 6C, placé entre la plaque supérieure des équipements internes 7 et la plaque supérieure de coeur 6, comporte une partie supérieure 8'b dans laquelle on assure un guidage discontinu de la grappe de réglage comme dans les tubes 8a, par l'intermédiaire de cartes de guidage 14 telles que représentées sur la figure 6B. Les cartes de guidage 14 comportent une cavité centrale, des ouvertures radiales et des ouvertures circulaires de guidage des crayons absorbants identiques à celles des cartes 13. Les cartes de guidage discontinu 14 présentent toutefois un contour extérieur non plus circulaire mais sensiblement carré destiné à être adapté à l'intérieur du tronçon de tube 8b à section carrée.

La partie inférieure 8"b du tronçon 8b du tube guide 8 constitue une zone de guidage continu du tube-guide 8 dans laquelle sont fixés des éléments de guidage des crayons absorbants de la grappe de guidage constitués par des fourreaux de guidage continu 16 et par des tubes fendus 17. Les fourreaux 16 comportent des canaux de guidage des crayons absorbants et ces canaux de guidage ainsi que les sections des tubes de guidage 17 sont dans une disposition, dans les plans transversaux du tube-guide, correspondant à celle des ouvertures de guidage des crayons absorbants des cartes de guidage 13 et 14 de la partie de guidage discontinu du tube de guidage 8.

Dans le cas de tubes de guidage 8 utilisés pour le guidage de grappes de réglage de la réactivité d'un réacteur nucléaire à eau sous pression de type habituel, la longueur totale du tube de guidage 8 est un peu supérieure à 4 mètres et la longueur de la zone de guidage discontinu 8"b est de l'ordre d'un mètre.

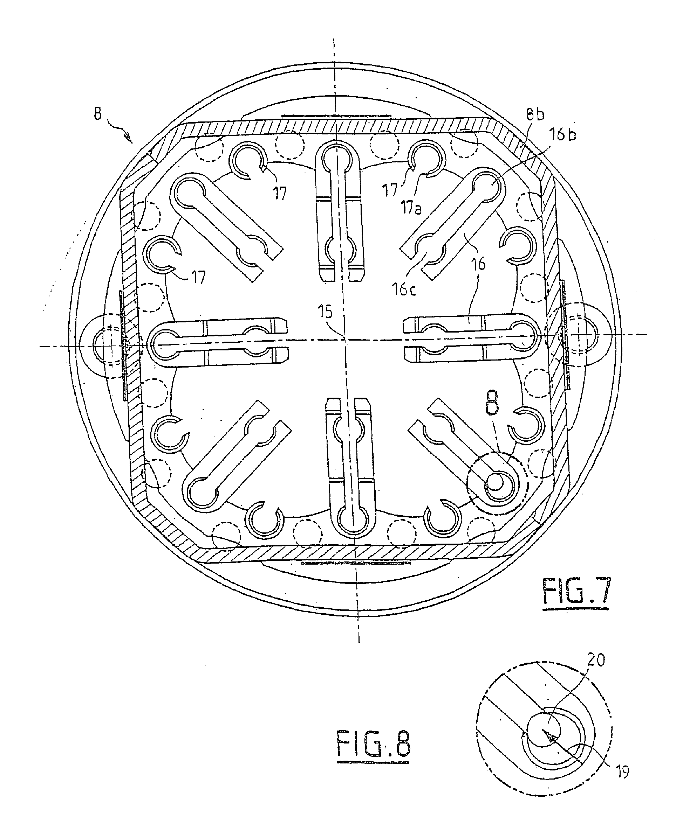

Sur la figure 7, on a représenté plus en détail la section d'une partie de guidage continu du tube-guide 8 qui comporte des fourreaux de guidage continu 16 et des tubes fendus 17. Chacun des fourreaux de guidage continu 16 comporte un évidement central 16a et deux canaux de guidage des crayons absorbants d'une grappe de réglage de réactivité ayant une forme cylindrique à section circulaire. Les canaux de guidage 16b et 16c des fourreaux 16 communiquent par l'intermédiaire de l'évidement 16a du fourreau avec l'espace libre central du tube de guidage 8 dans lequel on peut déplacer le pommeau de la grappe de réglage.

Les tubes fendus 17 comportent une fente 17a faisant communiquer l'espace intérieur de guidage du tube 17 avec l'espace libre central du tube-guide 8 dans lequel se déplace le pommeau de la grappe de réglage.

Les fourreaux de guidage 16 du guidage continu sont de deux types différents, les canaux de guidage 16b et 16c des fourreaux d'un premier type étant disposés à une distance radiale de l'axe 15 du tube de guidage différente de la distance radiale séparant l'axe 15 des canaux de guidage des fourreaux du second type.

Le tube-guide 8 comporte huit fourreaux de guidage dont les seize canaux de guidage comportent des axes placés quatre par quatre, suivant quatre surfaces cylindriques coaxiales ayant pour axe l'axe 5 du tube-guide.

Les tubes fendus 17 présentent des axes qui sont tous situés sur une même surface cylindrique ayant pour axe l'axe 15 du tube-guide 8.

Comme il est visible sur la figure 1, la cuve 1 du réacteur nucléaire comporte des tubulures 1b qui débouchent à l'intérieur de la cuve, au voisinage de la partie inférieure des équipements internes supérieurs au-dessus de la plaque supérieure de coeur 6, c'est-à-dire dans la zone 8"b de guidage discontinu des tubes-guides des équipements internes supérieurs 5.

L'eau de refroidissement du réacteur nucléaire provenant des différentes boucles du circuit primaire pénètre dans la cuve, par l'intermédiaire des tubulures 1 b, de sorte que la partie inférieure des tubes de guidage est soumise à un flux d'eau de refroidissement circulant dans une direction sensiblement radiale par rapport aux tubes-guides.

La partie d'une grappe de réglage de la réactivité du coeur constituée par des crayons absorbants 20 introduits dans les éléments de guidage continus du tube de guidage tel que représenté sur la figure 7 est soumise à une force de direction radiale tendant à plaquer les crayons absorbants 20 de la grappe de réglage contre une partie du canal de guidage dans lequel se déplace le crayon absorbant.

Sur la figure 7 et sur le détail de la figure 8, on a représenté un crayon absorbant 20 soumis à une force 19 de direction radiale exercée par l'eau de refroidissement du réacteur nucléaire. Le crayon absorbant 20 est déplacé vers la partie centrale des équipements internes supérieurs, de telle sorte que les crayons absorbants 20 viennent en contact avec une partie interne de la surface du canal de guidage correspondant.

Pendant le fonctionnement du réacteur nucléaire, le déplacement des grappes de guidage dans la direction axiale des tubes de guidage et les vibrations des crayons absorbants engendrées par la circulation de l'eau de refroidissement, dans la direction verticale, à travers les tubes de guidage, produit une usure préférentielle des éléments de guidage continu dans certaines parties des canaux de guidage, en particulier pour les tubes de guidage situés à la périphérie du coeur en vis-à-vis des tubulures 1 b de la cuve du réacteur nucléaire.

Pour une partie des canaux de guidage continu des tubes de guidage, l'usure préférentielle des canaux de guidage se produit vers l'intérieur du tube-guide, c'est-à-dire vers l'axe du tube-guide et, pour d'autres canaux situés à l'opposé, l'usure préférentielle des canaux de guidage se produit vers l'extérieur du tube-guide.

Pour assurer la retombée des grappes de réglage en position d'insertion maximale dans le coeur du réacteur nucléaire, par exemple dans le cas d'un arrêt d'urgence du réacteur nucléaire, on commande les mécanismes 9 des barres de commande, de manière à relâcher une tige à laquelle est fixé la grappe de commande. Les grappes de commande chutent, à l'intérieur des tubes de guidage des équipements internes supérieurs et à l'intérieur des assemblages de combustible, sous l'effet de la gravité.

Pendant la retombée des grappes de réglage, les crayons absorbants sont plaqués à l'intérieur des guidages discontinus contre les zones d'usure qui épousent parfaitement la forme de la surface extérieure des crayons absorbants, du fait de l'usure des canaux ayant un effet de rodage.

Il en résulte une surface de contact et un frottement accrus entre les crayons absorbants et la surface des canaux de guidage continu. Le temps de chute des grappes de réglage des barres de commande peut être ainsi accru jusqu'à atteindre des niveaux supérieurs au niveau maximal imposé par les conditions de sûreté de fonctionnement du réacteur nucléaire.

Pour restaurer le temps de chute des grappes de commande, de manière à pouvoir respecter les conditions de sûreté de fonctionnement du réacteur nucléaire, il est possible de remplacer les tubes de guidage périphériques des équipements internes supérieurs par des tubes de guidage neufs mais cette opération est extrêmement coûteuse.

Le procédé suivant l'invention consiste à réaliser un élargissement des canaux de guidage continu des tubes de guidage devenus défectueux en service, dans certaines zones au moins suivant la longueur du guidage continu (par exemple suivant trois zones réparties suivant la longueur du guidage continu). L'élargissement des canaux de guidage peut être réalisé par usinage (par exemple usinage par électroérosion) ou par formage (par exemple expansion hydraulique).

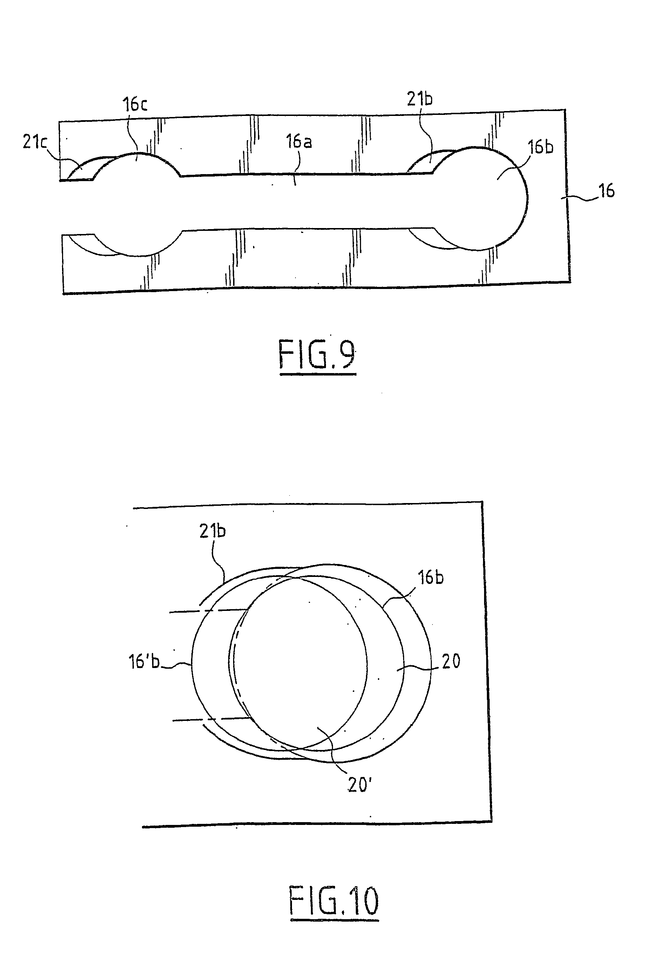

Sur la figure 9, on a représenté un fourreau 16 de guidage continu dont les canaux de guidage 16b et 16c ont été élargis, suivant le procédé de l'invention, pour restaurer le temps de chute d'une barre de commande dont deux crayons absorbants se déplacent respectivement à l'intérieur des canaux 16b et 16c.

Le procédé suivant l'invention consiste à réaliser suivant la longueur du fourreau 16, à l'intérieur des canaux de guidage 16b et 16c, des élargissements 21 b et 21 c constitués par des portions de surface cylindrique ayant un axe décalé par rapport à l'axe d'origine du canal de guidage correspondant 16b ou 16c.

Les élargissements 21 b et 21 c peuvent être réalisés par usinage par électroérosion ou par tout autre méthode d'usinage qui peut être mise en oeuvre sur les tubes de guidage des équipements internes supérieurs d'un réacteur nucléaire qui peuvent être fortement activés après un certain temps de fonctionnement du réacteur nucléaire.

L'usinage d'élargissement des canaux de guidage est généralement effectué sur les équipements internes supérieurs du réacteur nucléaire sortis de la cuve dans leur ensemble, après arrêt et refroidissement du réacteur nucléaire. La piscine du réacteur nucléaire est remplie d'eau et, après ouverture du couvercle 1 a de la cuve 1, il est possible de démonter et de sortir les équipements internes supérieurs, sous eau dans la piscine du réacteur, pour les déposer sur un stand d'examen et de réparation des équipements internes supérieurs dans le fond de la piscine du réacteur.

Généralement, on utilise un chariot qui se déplace sur le fond de la piscine du réacteur, en-dessous du stand des équipements internes supérieurs, éventuellement placés sur des réhausseurs, pour mettre en place un outil d'usinage à l'intérieur des tubes de guidage des équipements internes supérieurs, à différentes hauteurs. L'usinage par électroérosion peut être effectué sous eau dans la piscine et, comme il sera expliqué plus loin, on récupère les débris d'usinage à l'extrémité inférieure du tube-guide pour éviter de contaminer l'eau de la piscine du réacteur.

De manière typique, comme représenté sur la figure 9, on peut réaliser, dans le cas de canaux de guidage continu des équipements internes supérieurs d'un réacteur nucléaire à eau sous pression, plusieurs élargissement sous la forme de surfaces cylindriques usinées par électroérosion telles que 21 b et 21 c dont le rayon est de 5,5 mm et le centre décalé de l'ordre de 3 mm par rapport au centre d'origine du canal de guidage correspondant 16b ou 16c.

Suivant le guidage continu dont la longueur est voisine d'un mètre, on réalise trois zones réusinées régulièrement espacées suivant la direction axiale du guidage continu.

Sur la figure 10, on a représenté, à plus grande échelle, l'élargissement 21 b du canal de guidage 16b situé à l'extrémité extérieure du fourreau 16.

On a représenté sur la figure 10 le contour initial de la section transversale du canal de guidage externe du fourreau 16 dans lequel le crayon absorbant 20 dont on a représenté la section vient en appui, dans le cas d'équipements internes neufs dont les canaux de guidage n'ont subi aucune usure. La section du crayon absorbant 20 présente un diamètre légèrement inférieur au diamètre du canal de guidage initial 16b dont on a représenté, sous forme d'une ligne en pointillés, la section de la surface d'appui initiale à l'état neuf.

Dans le cas d'un crayon absorbant dont le diamètre est voisin de 10 mm, le canal de guidage correspondant présente un diamètre un peu supérieur à 11 mm. Au cours du fonctionnement du réacteur nucléaire, dans le cas d'un canal de guidage d'un fourreau d'un tube de guidage des équipements internes situé vers l'extérieur du coeur en vis-à-vis d'une arrivée de l'eau de refroidissement du réacteur, le crayon absorbant 20 est plaqué vers l'intérieur du canal de guidage 16b, comme représenté sur la figure 10, et produit une usure de la paroi du canal de guidage vers l'intérieur du tube de guidage. Le crayon absorbant 20 occupe une position 20' décalée vers l'intérieur par rapport à sa position initiale imposée par le canal de guidage 16b. Simultanément, la surface d'usure qui est analogue à un rodage produit un meilleur plaquage du crayon absorbant contre la surface intérieure du canal de guidage. L'augmentation de la surface de contact entre le crayon absorbant et le canal de guidage se traduit par une augmentation du frottement et donc, en cas de retombée des barres de commande, par une augmentation du temps de chute de la barre de commande comportant des crayons absorbants tels que le crayon 20' en contact avec sa surface d'usure.

On admet généralement qu'on ne doit pas dépasser une usure dans la direction diamétrale dirigée vers l'intérieure supérieure à 2 mm.

Lorsque cette usure est atteinte, il est possible soit de remplacer le tube de guidage comportant des canaux de guidage présentant l'usure maximale, soit de mettre en oeuvre le procédé de l'invention en réalisant un usinage 21 b sous forme de portions de cylindre vers l'intérieur du tube de guidage. On réalise par exemple un usinage de manière à obtenir deux portions de surface cylindrique élargissant la surface intérieure du canal de guidage, dont le rayon est voisin de 5,5 mm. Après qu'on a réalisé l'usinage selon l'invention, le crayon absorbant n'est plus en contact avec une surface d'usure augmentant le frottement. On restaure ainsi le temps de chute de la barre de commande.

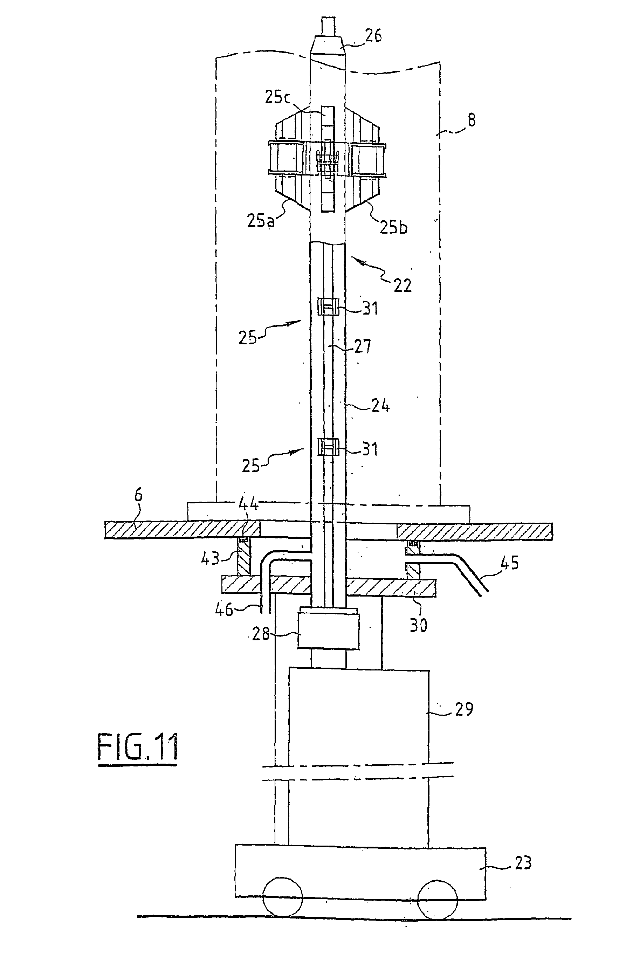

La restauration du temps de chute de grappes de commande par le procédé de l'invention peut être mise en oeuvre en effectuant un usinage des canaux de guidage des tubes de guidage avec un outillage tel que représenté sur les figures 11 à 17.

Sur la figure 11, on a représenté un dispositif 22 permettant de mettre en oeuvre le procédé suivant l'invention par usinage par électroérosion des canaux de guidage de tubes de guidage des équipements internes supérieurs d'un réacteur nucléaire à eau sous pression.

Le dispositif 22 est mis en oeuvre à l'intérieur de la piscine du réacteur, sous eau, les équipements internes supérieurs dont on a représenté la plaque supérieure de coeur 6 reposant sur un stand d'intervention sur les équipements internes supérieurs dans le fond de la piscine du réacteur.

Préalablement à la mise en oeuvre du procédé suivant l'invention, après arrêt et refroidissement du réacteur nucléaire, on démonte le couvercle de la cuve et on le dépose sur un stand d'examen et de réparation dans le fond de la piscine du réacteur.

On prélève les équipements internes supérieurs qui sont déposés sur le stand d'intervention réservé aux équipements internes supérieurs dans le fond de la piscine qui peut comporter des réhausseurs.

Dans cette position de stockage, la plaque supérieure de coeur 6 se trouve à une certaine distance au-dessus du fond de la piscine, de sorte qu'on peut intervenir sur les équipements internes supérieurs, par exemple pour introduire un outil tel que l'outil 22 dans un tube de guidage quelconque des équipements internes supérieurs, par le dessous de la plaque supérieure de coeur 6 qui est traversée par des ouvertures, généralement de forme carrée, au niveau de chacun des assemblages de combustible, et en particulier au niveau de chacun des assemblages de combustible dans lesquels on déplace une grappe de réglage de réactivité.

Le déplacement de l'outillage en-dessous des équipements internes supérieurs pour sa mise en place dans un tube de guidage quelconque des équipements internes supérieurs est réalisé en utilisant un chariot 23 pouvant se déplacer sur le fond de la piscine dans deux directions perpendiculaires entre elles, de manière à pouvoir présenter un outillage tel que l'outillage 22, à l'aplomb d'une ouverture quelconque traversant la plaque supérieure de coeur 6.

Le dispositif 22 utilisé pour la mise en oeuvre du procédé selon l'invention par usinage par électroérosion comporte une enveloppe externe 24 de forme tubulaire sur la surface extérieure de laquelle sont fixés, en trois emplacements successifs suivant la direction axiale de l'enveloppe 24, trois jeux 25 de quatre ailettes de guidage telles que 25a, 25b et 25c disposés suivant des plans axiaux de l'enveloppe tubulaire 24 de l'outil 22 faisant entre eux des angles de 90°. Suivant le nombre de zones à usiner suivant la longueur du guidage continu, le dispositif 22 peut comporter un nombre correspondant de jeux d'ailettes 20 quelconque, par exemple deux jeux ou plus.

Pour réaliser l'usinage par électroérosion à l'intérieur des éléments de guidage continu d'un tube-guide tel que représenté sur la figure 7, on introduit l'outil 22 dans la direction axiale 15 du tube de guidage dans lequel on réalise l'usinage des guidages continus et dans une disposition coaxiale au tube de guidage, par exemple en utilisant un moyen de levage fixé à un pommeau de préhension 26 fixé à l'extrémité supérieure de l'enveloppe 24 de l'outil 22.

L'outil 22 peut être déplacé à l'intérieur du tube de guidage 8, de manière que son enveloppe tubulaire se déplace à l'intérieur de l'espace libre central du tube de guidage, les ailettes de guidage des jeux d'ailettes 25 étant introduites et se déplaçant à l'intérieur des éléments de guidage continu constitués par les fourreaux 16 ou dans le prolongement radial vers l'intérieur, des fentes d'ouverture des tubes de guidage 17.

Les ailettes de guidage telles que 25a, 25b et 25c d'un jeu d'ailettes sont donc disposées de manière à pouvoir être introduites simultanément dans quatre fourreaux de guidage continu 16 disposés à 90° autour de l'axe 15 du tube de guidage ou dans le prolongement interne de la fente de quatre tubes fendus 17 qui peuvent être disposés également à 90° l'un de l'autre autour de l'axe 15 du tube de guidage.

En réalité, il est nécessaire d'utiliser des outils 22 de trois types différents.

L'un des outils sera utilisé pour l'usinage des canaux de guidage de quatre fourreaux de guidage 16 disposés à 90° les uns des autres, le second outillage sera utilisé pour réaliser l'usinage des canaux de guidage des quatre autres fourreaux du tube de guidage disposés à 90° l'un de l'autre et le troisième outil sera utilisé pour réaliser l'usinage de quatre tubes fendus 17 simultanément. En effet, la distance radiale des canaux de guidage à l'axe du tube de guidage est différente pour le premier ensemble de fourreaux 16 à 90° et pour le second ensemble de fourreaux 16. II n'est donc pas possible d'utiliser le même outil en le faisant tourner de 45° pour effectuer successivement l'usinage du premier ensemble de fourreaux et du second ensemble de fourreaux du tube de guidage. En revanche, il est possible d'utiliser le même outil pour effectuer successivement l'usinage d'un premier ensemble de quatre tubes fendus disposés à 90° l'un de l'autre et d'un second ensemble de tubes fendus également disposés à 90° l'un de l'autre.

Il serait possible également d'envisager l'utilisation d'un outil 22 comportant trois ensembles de huit ailettes de guidage permettant de réaliser simultanément le réusinage des huit tubes fendus du tube de guidage.

Chacune des ailettes de guidage telles que 25a, 25b et 25c assure, comme il sera décrit plus loin, le guidage d'un support d'électrode sur lequel sont fixées deux électrodes d'usinage par électroérosion d'élargissements cylindriques dans les canaux de guidage continu d'un tube de guidage des équipements internes supérieurs.

Dans le cas du réusinage de quatre fourreaux de guidage, on effectue donc simultanément, à l'intérieur des huit canaux de guidage des quatre fourreaux de guidage, vingt-quatre usinages dans des zones espacées suivant la longueur axiale des canaux de guidage, en utilisant vingt-quatre électrodes de forme adaptée.

Le dispositif 22 suivant l'invention comporte également des moyens permettant de réaliser simultanément l'avance des vingt-quatre électrodes d'usinage par électroérosion, cette avance étant réalisée vers l'intérieur des canaux de guidage, en direction de l'axe 15 du tube de guidage.

Les moyens utilisés pour réaliser simultanément l'avance des vingt-quatre électrodes d'usinage par électroérosion (dans le cas d'un fourreau de guidage en particulier) comportent une tige de commande 27 disposée suivant l'axe de l'enveloppe tubulaire 24 de l'outil 22 et mobile suivant cet axe pour réaliser le mouvement d'avance des électrodes.

La tige de commande 27 est reliée, à son extrémité située en partie inférieure sous la plaque supérieure de coeur 6 dans la position de service de l'outil 22, à un moyen de déplacement 28 tel qu'un vérin monté sur une tête 29 de l'outil 22 solidaire d'un support 30 sur lequel est fixée, au niveau d'une ouverture traversante, l'extrémité inférieure de l'enveloppe tubulaire 24 de l'outil 22.

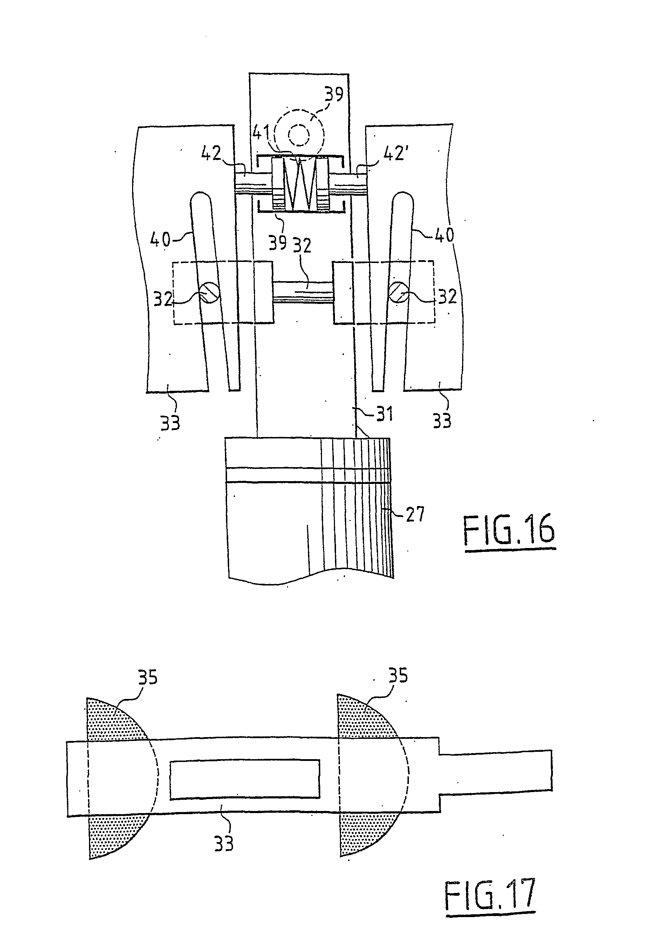

Comme il sera expliqué plus loin en regard de la figure 16, la tige de commande 27 comporte des tronçons tubulaires auxquels sont reliés des croisillons d'actionnement 31 intercalés chacun entre deux tronçons tubulaires successifs de la tige de commande 27. Les trois croisillons d'actionnement 31 sont disposés chacun sensiblement en vis-à-vis d'un ensemble 25 de quatre ailettes de guidage, de manière à pouvoir effectuer simultanément l'actionnement de quatre porte-électrodes guidés par les ailettes de guidage.

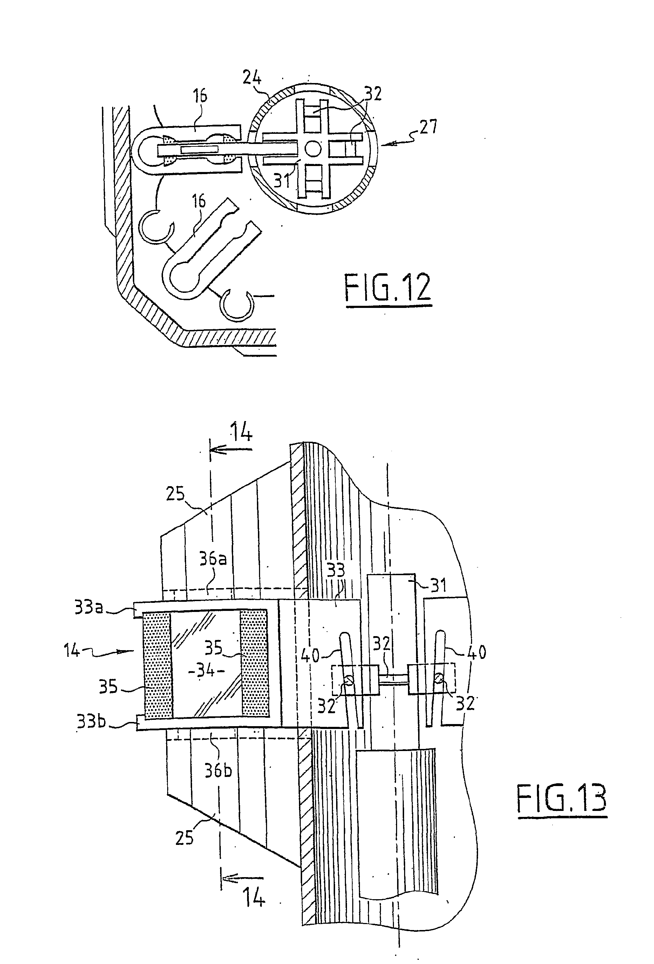

Sur la figure 12, on a représenté un croisillon 31 mobile à l'intérieur du corps tubulaire 24 de l'outil 22, de manière à assurer simultanément l'avance de quatre porte-électrodes montés mobiles dans la direction radiale, à l'intérieur d'une ouverture d'une ailette de guidage qui est introduite dans l'ouverture centrale 16a d'un fourreau de guidage 16.

Le croisillon 31 comporte quatre branches à 90° pour actionner simultanément les porte-électrodes montés mobiles dans quatre ailettes à 90° d'un jeu d'ailettes de guidage 25 de l'outil 22.

Chacune des branches du croisillon 31 est réalisée sous la forme d'une fourche dans laquelle est monté un axe de commande 32.

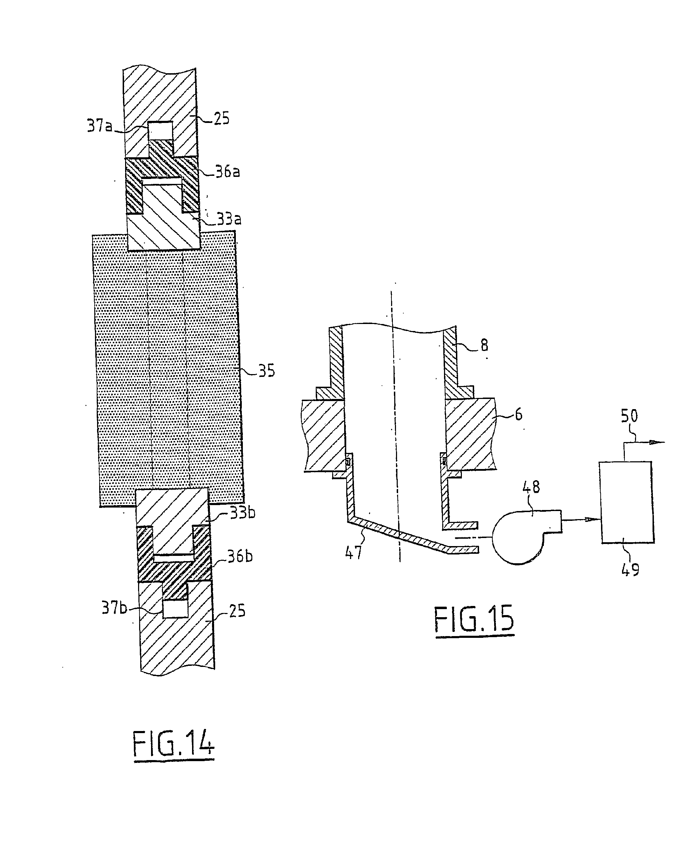

Comme il est visible sur les figures 13 et 14, chaque porte-électrode 33 ayant sensiblement la forme d'une plaque plane comporte deux branches 33a et 33b parallèles entre elles situées de part et d'autre d'une ouverture 34 dans laquelle sont fixées, dans des dispositions parallèles, deux électrodes 35.

Le porte-électrode 33 comporte des moyens permettant de réaliser le montage et le remplacement des électrodes 35 après un certain temps d'utilisation.

Le porte-électrode 33 comporte, montées sur chacune de ses branches 33a et 33b, du côté externe par rapport à la cavité 34, des glissières respectives 36a et 36b en une matière isolante de l'électricité.

Les glissières 33a et 33b sont montées à glissement dans des glissières de guidage respectives 36a et 36b montées serrées sur le cadre 25 et situées de part et d'autre de l'ouverture de l'ailette de guidage 25 dans laquelle est guidé le porte-électrode 33. Le porte-électrode 33 est ainsi monté mobile dans la direction radiale de l'ailette correspondante 25, c'est-à-dire dans la direction longitudinale de l'espace central 16a du fourreau 16 joignant les canaux de guidage 16b et 16c du fourreau 16 dans lequel est introduite l'ailette de guidage 25.

Comme il est visible sur la figure 13, le support d'électrode 33 comporte dans une partie d'extrémité interne, dans le prolongement des branches 33a et 33b, une ouverture 40 rectiligne et légèrement inclinée par rapport à l'axe longitudinal commun à la tige de commande 27 et à l'outil 22. La fente 40 présente une largeur sensiblement égale au diamètre de l'axe d'actionnement 32 de l'une des branches du croisillon 31. Lors des déplacements dans un sens ou dans l'autre du croisillon 31 suivant la direction axiale de l'outil mis en place dans une disposition coaxiale à l'intérieur du tube de guidage, l'axe d'actionnement 32 produit un déplacement du porte-électrode 33 soit vers l'intérieur, c'est-à-dire en direction de l'axe longitudinal de l'outil 22 ou vers l'extérieur, c'est-à-dire dans la direction opposée.

Dans le cas d'une fente 40 légèrement inclinée vers l'extérieur de bas en haut, comme représenté sur les figures 13 et 16, un déplacement vers le haut de la tige de commande 27 et des croisillons 31 produit un déplacement vers l'intérieur du porte-électrodes et des électrodes. On réalise le réusinage des canaux de guidage, pendant ce déplacement vers l'intérieur du porte-électrodes 33 et des électrodes 35.

Comme il est visible sur la figure 16, chacun des croisillons 31 porte deux ensembles de deux systèmes de rappel à pistons et ressort 39, pour assurer chacun le rappel de deux porte-électrodes disposés à 180° l'un de l'autre, vers l'extérieur, lorsqu'on déplace la tige de commande 27 et le croisillon 31 vers le bas.

Chacun des dispositifs de rappel 39 comporte un ressort hélicoïdal 41 et deux pistons 42 et 42' montés mobiles dans des cavités usinées dans le croisillon 31 dans le prolongement l'une de l'autre et dirigées chacune vers la partie d'extrémité d'un porte-électrodes 33, de manière que les pistons 42 et 42' viennent en contact avec la partie d'extrémité des portes-électrodes 33 pour assurer le rappel des porte-électrodes vers l'extérieur, par poussée.

Sur la figure 17, on a représenté un porte-électrode 33 sur lequel sont montées deux électrodes 35 permettant d'usiner simultanément des élargissements délimités par des portions de surface cylindrique, à l'intérieur de deux canaux d'un fourreau de guidage 16 des équipements internes supérieurs.

Chacun des ensembles d'ailettes 25 d'un outil utilisé pour assurer l'élargissement des canaux de guidage de quatre fourreaux de guidage 16 comporte des moyens de guidage de quatre porte-électrodes qui sont actionnés simultanément par un croisillon.

Le réusinage d'un tube de guidage pour restaurer le temps de chute de la grappe de réglage guidée à l'intérieur du tube peut donc être réalisé de manière rapide et automatique.

Toutefois, pour réaliser le réusinage d'un tube de guidage, il est nécessaire de mettre en oeuvre successivement trois outillages 22 différents pour réaliser l'intervention dans deux ensembles de fourreaux 16 à 90° et dans les tubes fendus 17.

Le procédé suivant l'invention permet donc de restaurer le temps de chute de grappes de commande sans démonter et remplacer les tubes de guidage des équipements internes supérieurs.

Lors d'un arrêt du réacteur nucléaire, après refroidissement, on remplit la piscine du réacteur et on ouvre le couvercle, de manière à pouvoir extraire les équipements internes supérieurs de la cuve et de les déposer sur leur stand de stockage en piscine.

On effectue un contrôle de la géométrie et des dimensions des canaux de guidage, en particulier des canaux de guidage continu, pour évaluer l'usure des canaux et préparer l'intervention selon le procédé de l'invention. On connaît des dispositifs qui permettent de réaliser le contrôle de l'ensemble des canaux de guidage d'un tube de guidage des équipements internes supérieurs, en piscine.

Après avoir placé les équipements internes supérieurs sur leur stand de stockage, dans le fond de la piscine, on réalise, en utilisant un dispositif de contrôle de type connu, un relevé de la géométrie des canaux de guidage continu des tubes de guidage des équipements internes supérieurs. On détermine ainsi s'il est nécessaire de mettre en oeuvre le procédé suivant l'invention et sur quels tubes de guidage des équipements internes supérieurs il doit être mis en oeuvre.

On peut donc limiter les opérations d'intervention pour élargissement des canaux de guidage, aux tubes de guidage pour lesquels ces opérations sont nécessaires.

On utilise ensuite le chariot élévateur porte-outil qui met en position le support 30 contre la plaque supérieure de coeur 6a et qui circule en fond de piscine en dessous du stand de stockage, ainsi qu'un palan pour intervenir par le dessus des équipements internes supérieurs et assurer le levage du dispositif d'usinage à l'intérieur de chacun des tubes de guidage.

On réalise la mise en place du dispositif d'usinage, successivement dans chacun des tubes de guidage à usiner.

Pendant l'usinage par électroérosion, les particules de métal détachées par étincelage tombent vers la partie inférieure des équipements internes supérieurs et traversent la plaque supérieure de coeur par l'ouverture dans laquelle on a introduit l'outil 22.

Comme il est visible sur la figure 11, on peut fixer sur le support 30 de l'outil 22 une boîte de récupération de débris 43 comportant un joint 44 d'application étanche contre la face inférieure de la plaque tubulaire 6, autour de l'ouverture de traversée. On récupère les débris métalliques par l'intermédiaire d'un tuyau d'aspiration 45 à grand débit.

Une faible proportion des débris tombe à l'intérieur du corps tubulaire 24 de l'outil 22 pour être récupérée par aspiration grâce à un conduit d'aspiration à faible débit 46.

Sur la figure 15, on a représenté une variante de réalisation des moyens de récupération et de filtrage des particules formées par l'usinage d'un tube de guidage 8 dont la partie inférieure est fixée sur la plaque supérieure de coeur, autour de l'ouverture par laquelle on fait pénétrer l'outil d'usinage par électroérosion à l'intérieur du tube de guidage.

Le dispositif comporte un carter de récupération 47 fixé de manière étanche à l'eau à l'intérieur de l'ouverture traversante de la plaque supérieure de coeur 6. Le carter de récupération 47 est relié à un circuit de filtration comportant une pompe 48 et un filtre 49. L'eau sortant du filtre est éliminée, comme représenté par la flèche 50.

L'invention ne se limite pas strictement au mode de réalisation qui a été décrit.

C'est ainsi qu'on peut effectuer des opérations d'élargissement de canaux de guidage continu de tubes de guidage d'équipements internes supérieurs par des méthodes d'usinage différentes d'un usinage par électroérosion.

On peut par exemple envisager d'utiliser des méthodes d'usinage électrochimique avec un électrolyte à base de lithium qui est compatible avec les additifs de l'eau de refroidissement du réacteur nucléaire. Cependant, il n'est pas possible généralement de mettre en oeuvre un procédé d'usinage par électrochimie sur les équipements internes supérieurs disposés sur leur stand de stockage en piscine et non démontés.

Pour mettre en oeuvre un procédé d'élargissement des canaux de guidage continu de tubes de guidage avec un usinage par électrochimie, on démonte la partie inférieure de guidage continu des tubes de guidage et on place cette partie inférieure du tube de guidage dans un carquois entourant au moins la partie supérieure du guidage continu. On place le carquois de manière à recouvrir une cuve d'usinage par électrochimie située sous eau, dans la piscine, au voisinage du stand de stockage des équipements internes supérieurs. On peut ainsi réaliser un usinage par électrochimie des canaux de guidage continu du tube de guidage. Il est également possible d'utiliser la même technique pour effectuer l'usinage par électroérosion des canaux de guidage continu, après démontage du tube de guidage.

Il est possible également d'utiliser d'autres méthodes d'usinage telles que des usinages mécaniques, qui peuvent être mis en oeuvre sous eau dans la piscine du réacteur nucléaire.

Il est possible également d'utiliser la technique d'élargissement des canaux de guidage continu déjà utilisée sur les équipements internes neufs, c'est-à-dire un élargissement par expansion hydraulique.

Au lieu de réaliser des élargissements dans des zones discontinues délimitées par des surfaces cylindriques non coaxiales aux canaux de guidage, ces zones étant désignées par le terme "baquets", on peut réaliser, par usinage ou par formage, des élargissement discontinus annulaires coaxiaux aux canaux ayant la forme de gorges ou encore des élargissements continus sous la forme de rainures hélicoïdales à l'intérieur des canaux de guidage continu du tube de guidage.

On peut réaliser simultanément l'élargissement d'un ensemble de canaux de guidage d'un tube de guidage par usinage ou par formage dans plus de trois zones de chaque canal suivant sa longueur ou dans deux zones seulement. Lorsqu'on utilise des électrodes d'usinage par exemple par électroérosion, on peut réaliser l'avance simultanée des électrodes en cours d'usinage, en déplaçant simultanément des porte-électrodes sur lesquels sont fixées une ou plusieurs électrodes.

De manière générale, l'élargissement interne des canaux de guidage continu peut être réalisé par tout procédé de formage ou d'usinage permettant d'accroître la section disponible pour les crayons absorbants à l'intérieur du guidage continu du tube de guidage.

Du fait du déplacement des grappes de commande à l'intérieur des tubes de guidage des équipements internes supérieurs en vis-à-vis des arrivées d'eau de refroidissement dans la cuve du réacteur, certains canaux de guidage continu des tubes de guidage subissent une usure vers l'intérieur du tube de guidage et d'autres canaux vers l'extérieur du tube de guidage. Un réusinage du côté interne des canaux de guidage continu permet cependant de diminuer le temps de chute de ces grappes de réglage par élargissement du passage des crayons absorbants, dans les canaux de guidage.

L'invention s'applique de manière générale à tout réacteur nucléaire refroidi par de l'eau comportant des grappes de réglage de la réactivité du coeur du réacteur nucléaire qui peuvent être introduites en position d'insertion maximale dans le coeur du réacteur par chute sous l'effet de la gravité, à travers des tubes de guidage comportant des canaux de guidage continu.

## Revendications

1. Procédé de restauration du temps de chute d'au moins une grappe de commande (8) de réglage de la réactivité dans le coeur (2) d'un réacteur nucléaire refroidi par de l'eau légère, comportant au-dessus du coeur (2) constitué par des assemblages de combustible (3) juxtaposés, placés dans une cuve (1) du réacteur nucléaire et ayant des tubes-guides (12) pour le guidage de crayons absorbants (20) de la grappe de réglage, disposés verticalement, des équipements internes supérieurs (5) reposant sur la partie supérieure des assemblages de combustible (3) du coeur (2), par l'intermédiaire d'une plaque supérieure de coeur (6) dans une disposition horizontale et comprenant un ensemble de tubes de guidage verticaux (8) utilisés chacun pour le guidage d'une grappe de commande constituée par un faisceau de crayons absorbants (20, 20') parallèles entre eux et comportant une pluralité de canaux de guidage (16b, 16c, 17) des crayons absorbants (20, 20') parallèles entre eux situés dans l'alignement axial des tubes-guides (12) d'un assemblage de combustible (3) et comprenant une partie d'extrémité voisine de la plaque supérieure de coeur (6) réalisée sous la forme d'un canal de guidage continu (16b, 16c, 17), **caractérisé par le fait qu'**on réalise, dans une piscine du réacteur nucléaire qui a été mis à l'arrêt et refroidi après une période de fonctionnement, sur au moins un tube de guidage (8) des équipements internes supérieurs (5) activés, un élargissement des canaux de guidage (16b, 16c, 17) du tube de guidage (8), dans au moins une zone des canaux de guidage continu (16b, 16c, 17).

2. Procédé suivant la revendication 1, **caractérisé par le fait qu'**on réalise l'élargissement des canaux de guidage de l'au moins un tube de guidage (8) des équipements internes supérieurs (5) du réacteur, sur les équipements internes à l'état non démonté et placés sur un stand d'examen et de réparation, dans la piscine du réacteur.

3. Procédé suivant l'une quelconque des revendications 1 et 2, **caractérisé par le fait qu'**on réalise l'élargissement des canaux de guidage (16b, 16c, 17) par l'un des procédés suivants : usinage par électroérosion, usinage mécanique, formage hydraulique.

4. Procédé suivant la revendication 1, **caractérisé par le fait qu'**on démonte, au moins le tube de guidage (8) des équipements internes supérieurs (5) et qu'on réalise l'usinage sur la partie inférieure de guidage continu du tube de guidage (8) sous eau, dans une zone d'usinage, à l'intérieur de la piscine du réacteur.

5. Procédé suivant la revendication 4, **caractérisé par le fait qu'**on réalise l'élargissement par usinage des canaux de guidage continu (16b, 16c, 17), par l'un des procédés suivants : usinage par électroérosion, usinage par électrochimie, usinage mécanique, formage hydraulique.

6. Procédé suivant l'une quelconque des revendications 1 à 5, **caractérisé par le fait qu'**on réalise un élargissement discontinu des canaux de guidage (16b, 16c, 17) du tube de guidage (8), sous la forme de zones élargies comportant des parois cylindriques non coaxiales aux canaux de guidage, appelées baquets.

7. Procédé suivant l'une quelconque des revendications 1 à 5, **caractérisé par le fait qu'**on réalise un élargissement par usinage dans des zones annulaires discontinues coaxiales aux canaux de guidage, sous la forme de gorges.

8. Procédé suivant l'une quelconque des revendications 1 à 5, **caractérisé par le fait qu'**on réalise un élargissement des canaux de guidage (16b, 16c) par usinage d'au moins une rainure hélicoïdale continue, suivant chaque canal de guidage continu (16b, 16c, 17).

9. Procédé suivant la revendication 6, **caractérisé par le fait qu'**on réalise, à l'intérieur de chacun des canaux de guidage continu (16b, 16c, 17), trois élargissements espacés suivant la direction axiale du canal de guidage continu (16b, 16c, 17).

10. Procédé suivant l'une quelconque des revendications 1 à 9, **caractérisé par le fait qu'**on réalise, de manière simultanée, l'élargissement d'un ensemble de canaux de guidage continu (16b, 16c, 17) du tube de guidage (18), dans au moins deux zones suivant la longueur de chacun des canaux de guidage continu (16b, 16c, 17).

11. Dispositif de restauration du temps de chute d'au moins une grappe de commande (8) de réglage de la réactivité dans le coeur (2) d'un réacteur nucléaire refroidi par de l'eau légère, comportant au-dessus du coeur (2) constitué par des assemblages de combustible (3) juxtaposés, placés dans une cuve (1) du réacteur nucléaire ayant des tubes-guides (12) pour le guidage de crayons absorbants (20) de la grappe de réglage disposés verticalement, des équipements internes supérieurs (5) reposant sur la partie supérieure des assemblages de combustible (3) du coeur (2), par l'intermédiaire d'une plaque supérieure de coeur (6) dans une disposition horizontale et comprenant un ensemble de tubes de guidage verticaux (8) utilisés chacun pour le guidage d'une grappe de commande constituée par un faisceau de crayons absorbants (20, 20') parallèles entre eux et comportant une pluralité de canaux de guidage (16b, 16c, 17) des crayons absorbants (20, 20') parallèles entre eux situés dans l'alignement axial des tubes-guides (12) d'un assemblage de combustible (3) et comprenant une partie d'extrémité voisine de la plaque supérieure de coeur (6) réalisée sous la forme d'un canal de guidage continu (16b, 16c, 17), **caractérisé par le fait qu'**il comporte un outil d'usinage (22) et des moyens (23, 26) pour placer et introduire l'outil d'usinage (22) à l'intérieur du canal de guidage continu (16b, 16c, 17 du tube de guidage (8) des équipements internes supérieurs (5) dans une position d'usinage et des moyens de commande à distance de moyens d'usinage (35) pour réaliser l'élargissement des canaux de guidage (16b, 16c, 17) du tube de guidage (8) dans au moins une zone du canal de guidage continu (16b, 16c, 17).

12. Dispositif suivant la revendication 11, **caractérisé par le fait que** l'outil d'usinage (22) est un outil d'usinage par électroérosion comportant un corps tubulaire (24) sur la surface extérieure duquel sont fixées des ailettes de guidage (25a, 25b) d'au moins une électrode d'électroérosion (35) dans une direction radiale perpendiculaire à l'axe du corps tubulaire (24) de l'outil (22) placé dans une disposition coaxiale à l'intérieur du tube de guidage et que les moyens de commande de l'outil d'usinage par électroérosion (22) comportent une tige de commande (27) montée mobile dans la direction axiale du corps tubulaire (24) de l'outil (22) sur laquelle est fixé au moins un moyen (31) de déplacement dans la direction radiale de l'au moins une électrode (35) d'électroérosion, pour réaliser un déplacement radial de l'électrode d'électroérosion (35) et assurer l'avance d'usinage par électroérosion, lors de la réalisation de l'élargissement du canal de guidage continu (16b, 16c, 17) du tube de guidage (18).

13. Dispositif suivant la revendication 12, **caractérisé par le fait que** l'au moins une électrode (35) d'usinage par électroérosion est fixée sur un porte-électrode (33) comportant une ouverture rectiligne inclinée par rapport à l'axe du corps tubulaire (24) de l'outil (22) et que le moyen d'actionnement (31) de la tige de commande (27) comporte au moins un axe d'actionnement (32) mobile dans la direction axiale de l'outil (22) engagé dans l'ouverture (40) du support d'électrode (33).

14. Dispositif suivant l'une quelconque des revendications 12 et 13, **caractérisé par le fait que** l'outil (22) comporte au moins deux ensembles (25) d'ailettes de guidage (25a, 25b, 25c) espacés l'un de l'autre suivant la direction axiale du corps tubulaire de l'outil (22), dans chacune desquels est montée mobile, dans la direction radiale, au moins une électrode (35) d'usinage par électroérosion.

15. Dispositif suivant la revendication 14, **caractérisé par le fait que** chacun des ensembles (25) d'ailettes de guidage (25a, 25b, 25c) de l'outil (22) comporte quatre ailettes de guidage (25a, 25b, 25c) disposées suivant des plans axiaux de l'outil (22) faisant entre eux des angles de 90°, chacune des ailettes de guidage (25a, 25b, 25c) de chacun des ensembles (25) permettant le guidage de deux électrodes (35) parallèles entre elles portées par un même support d'électrode (33), de manière qu'on puisse réaliser l'élargissement simultané d'au moins huit canaux de guidage continu (16b, 16c, 17) dans au moins deux zones et de préférence trois zones espacées suivant la longueur des canaux de guidage continu (16b, 16c, 17).

16. Dispositif suivant l'une quelconque des revendications 11 à 15, **caractérisé par le fait qu'**il comporte de plus des moyens (23, 26) de mise en place de l'outil (22), à l'intérieur de la piscine du réacteur, à l'intérieur d'un canal de guidage quelconque (8) des équipements internes supérieurs (5) posés sur un stand de contrôle et de réparation dans la piscine du réacteur.

17. Dispositif suivant la revendication 16, **caractérisé par le fait que** les moyens de mise en place de l'outil (2) dans un tube de guidage (8) des équipements internes supérieurs (5) comportent un chariot élévateur (23) mobile sur le fond de la piscine du réacteur et un moyen de levage (26) de l'outil (22) suivant la direction axiale verticale (15) du tube de guidage (8).

## Claims

1. Method for restoring the fall-time of at least one control cluster (8) for regulating reactivity in the core (2) of a light-water-cooled nuclear reactor, comprising above the core (2), which is made up of juxtaposed fuel assemblies (3), placed in a tank (1) of the nuclear reactor and having guide tubes (12) for guiding absorbent rods (20) of the regulating cluster, which are disposed vertically, upper internal equipment (5) resting on the upper part of the fuel assemblies (3) of the core (2), via an upper core plate (6) in a horizontal arrangement and comprising a set of vertical guide tubes (8) each used to guide a control cluster consisting of a bundle of absorbent rods (20, 20') which are parallel to one another and comprise a plurality of guide channels (16b, 16c, 17) for the absorbent rods (20, 20') which are parallel to one another and located in axial alignment with the guide tubes (12) of a fuel assembly (3) and comprising an end part adjacent to the upper core plate (6) made in the form of a continuous guidance channel (16b, 16c, 17), **characterised in that** widening of the guide channels (16b, 16c, 17) of the guide tube (8) is carried out, on at least one guide tube (8) of the activated upper internal equipment (5), in at least one zone of the continuous guidance channels (16b, 16c, 17), in a pool of the nuclear reactor which has been shut down and cooled after a period of operation.

2. Method according to claim 1, **characterised in that** the widening of the guide channels of the minimum of one guide tube (8) of the upper internal equipment (5) of the reactor is carried out on the internal equipment in the non-dismantled state, which has been placed on an inspection and repair stand, in the pool of the reactor.

3. Method according to one of claims 1 and 2, **characterised in that** the widening of the guide channels (16b, 16c, 17) is carried out by one of the following processes: electrodischarge machining, mechanical machining, hydraulic forming.

4. Method according to claim 1, **characterised in that** at least the guide tube (8) of the upper internal equipment (5) is dismantled, and the machining is carried out on the lower part for continuous guiding of the guide tube (8) under water, in a machining zone, in the pool of the reactor.

5. Method according to claim 4, **characterised in that** the widening by machining of the continuous guidance channels (16b, 16c, 17) is carried out by one of the following processes: electrodischarge machining, electrochemical machining, mechanical machining, hydraulic forming.

6. Method according to any one of claims 1 to 5, **characterised in that** discontinuous widening of the guide channels (16b, 16c, 17) of the guide tube (8) is carried out, in the form of widened zones comprising cylindrical walls which are not coaxial with the guide channels, known as buckets.

7. Method according to any one of claims 1 to 5, **characterised in that** widening is carried out by machining in discontinuous annular zones coaxial with the guide channels, in the form of grooves.

8. Method according to any one of claims 1 to 5, **characterised in that** widening of the guide channels (16b, 16c) is carried out by machining at least one continuous helical groove along each continuous guidance channel (16b, 16c, 17).

9. Method according to claim 6, **characterised in that** inside each of the continuous guidance channels (16b, 16c, 17), are produced three widened portions which are spaced apart in the axial direction of the continuous guidance channel (16b, 16c, 17).

10. Method according to any one of claims 1 to 9, **characterised in that** the widening of a set of continuous guidance channels (16b, 16c, 17) of the guide tube (18) is carried out simultaneously in at least two zones along the length of each of the continuous guidance channels (16b, 16c, 17).

11. Device for restoring the fall-time of at least one control cluster (8) for regulating reactivity in the core (2) of a light-water-cooled nuclear reactor, comprising above the core (2) consisting of juxtaposed fuel assemblies (3), placed in a tank (1) of the nuclear reactor and having guide tubes (12) for guiding absorbent rods (20) of the regulating cluster, disposed vertically, upper internal equipment (5) resting on the upper part of the fuel assemblies (3) of the core (2), via an upper core plate (6) disposed horizontally and comprising a set of vertical guide tubes (8) each used to guide a control cluster consisting of a bundle of absorbent rods (20, 20') which are parallel to one another and comprising a plurality of guide channels (16b, 16c, 17) for the absorbent rods (20, 20') which are parallel to one another and located in axial alignment with the guide tubes (12) of a fuel assembly (3) and comprising an end part adjacent to the upper core plate (6) made in the form of a continuous guidance channel (16b, 16c, 17), **characterised in that** it comprises a machining tool (22) and means (23, 26) for positioning and introducing the machining tool (22) inside the continuous guidance channel (16b, 16c, 17) of the guide tube (8) of the upper internal equipment (5) in a machining position and means for remotely controlling machining means (35) in order to carry out the widening of the guide channels (16b, 16c, 17) of the guide tube (8) in at least one zone of the continuous guidance channel (16b, 16c, 17).

12. Device according to claim 11, **characterised in that** the machining tool (22) is a tool for electrodischarge machining comprising a tube body (24) on the outer surface of which are attached the guide fins (25a, 25b) of at least one electrodischarge electrode (35) in a radial direction perpendicular to the axis of the tube body (24) of the tool (22) placed in an arrangement coaxial with the inside of the guide tube, and **in that** the control means of the electrodischarge machining tool (22) comprise a control rod (27) mounted to be movable in the axial direction of the tube body (24) of the tool (22) to which is fixed at least one means (31) of radially moving the minimum of one electrodischarge electrode (35), in order to effect radial movement of the electrodischarge electrode (35) and advance the electrodischarge machining, during the widening of the continuous guidance channel (16b, 16c, 17) of the guide tube (18).

13. Device according to claim 12, **characterised in that** the minimum of one electrodischarge machining electrode (35) is attached to an electrode carrier (33) comprising a straight opening which is inclined relative to the axis of the tube body (24) of the tool (22), and the actuating means (31) of the control rod (27) comprises at least one actuating spindle (32) which is movable in the axial direction of the tool (22) engaging in the opening (40) in the electrode carrier (33).

14. Device according to any one of claims 12 and 13, **characterised in that** the tool (22) comprises at least two sets (25) of guide fins (25a, 25b, 25c) spaced from one another in the axial direction of the tube body of the tool (22), each one of which has mounted in it at least one electrodischarge machining electrode (35), mounted to be movable in the radial direction.

15. Device according to claim 14, **characterised in that** each of the sets (25) of guide fins (25a, 25b, 25c) of the tool (22) comprises four guide fins (25a, 25b, 25c) arranged in axial planes of the tool (22) forming between them angles of 90°, each of the guide fins (25a, 25b, 25c) of each of the sets (25) allowing the guiding of two electrodes (35) parallel to one another, carried by the same electrode carrier (33), so that at least eight continuous guidance channels (16b, 16c, 17) can be widened simultaneously in at least two zones and preferably three zones spaced apart along the length of the continuous guidance channels (16b, 16c, 17).

16. Device according to any one of claims 11 to 15, **characterised in that** it further comprises means (23, 26) for positioning the tool (22), in the pool of the reactor, inside any desired guide channel (8) of the upper internal equipment (5) placed on an inspection and repair stand in the pool of the reactor.

17. Device according to claim 16, **characterised in that** the means for positioning the tool (2) in a guide tube (8) of the upper internal equipment (5) comprise an elevator carriage (23) which is movable along the bottom of the pool of the reactor and means (26) for raising the tool (22) in the vertical axial direction (15) of the guide tube (8).

## Patentansprüche

1. Verfahren zur Wiederherstellung der Einfallzeit wenigstens eines Steuerstabs bzw. Steuerelements (8) zur Regelung der Reaktivität im Reaktorkem (2) eines leichtwassergekühlten Kernreaktors, der über dem Reaktorkern (2), gebildet durch aneinandergrenzende Brennelemente (3), die sich in einem Behälter (1) des Reaktors befinden und zur Führung von Absorberstäben (20) des Steuerelements vertikal angeordnete Führungsrohre (12) haben, obere Inneneinrichtungen (5) umfasst, die auf dem Oberteil der Brennelemente (3) des Reaktorkerns (2) auf einer oberen Platte (6) des Reaktorkerns in horizontaler Position ruhen und eine Gruppe vertikaler Führungsrohre (8) umfassen, von denen jedes zur Führung eines Steuerelements benutzt wird, gebildet durch ein Bündel zueinander paralleler Absorberstäbe (20, 20') und eine Vielzahl zueinander paralleler Führungskanäle (16b, 16c, 17) der Absorberstäbe (20, 20'), die axial mit den Führungsrohren (12) eines Brennelements (3) fluchten und einen Endteil nahe der oberen Platte des Reaktorkerns (6) umfassen, realisiert in Form eines kontinuierlichen Führungskanals (16b, 16c, 17),
**dadurch gekennzeichnet, dass** man in einem Becken des Kernreaktors, das nach einer Betriebsperiode stillgelegt wurde und abgekühlt ist, bei wenigstens einem Führungsrohr der aktivierten oberen Inneneinrichtungen (5) eine Vergrößerung bzw. Erweiterung der Führungskanäle (16b, 16c, 17) des Führungsrohrs (8) in wenigstens einer Zone der kontinuierlichen Führungskanäle (16b, 16c, 17) realisiert.

2. Verfahren nach Anspruch 1, **dadurch gekennzeichnet, dass** man die Erweiterung der Führungskanäle wenigstens eines Führungsrohrs (8) der oberen Inneneinrichtungen (5) des Reaktors in dem Becken des Reaktors realisiert, wobei die Inneneinrichtungen sich im nicht-demontierten bzw. unzerlegten Zustand befinden, angeordnet auf einem Prüf- und Reparaturstand.

3. Verfahren nach einem der Ansprüche 1 und 2, **dadurch gekennzeichnet, dass** man die Erweiterung der Führungskanäle (16b, 16c, 17) mittels eines der folgenden Verfahren realisiert: Elektroerosionsbearbeitung, mechanische Bearbeitung, hydraulische Formung.

4. Verfahren nach Anspruch 1, **dadurch gekennzeichnet, dass** man wenigstens das Führungsrohr (8) der oberen Inneneinrichtungen (5) demontiert und die Bearbeitung des unteren kontinuierlichen Führungsteils des Führungsrohrs (8) unter Wasser realisiert, in einer Bearbeitungszone, im Innern des Beckens des Reaktors.

5. Verfahren nach Anspruch 4, **dadurch gekennzeichnet, dass** man die Erweiterung durch Bearbeitung der kontinuierlichen Führungskanäle (16b, 16c, 17) durch eines der folgenden Verfahren realisiert: Elektroerosionsbearbeitung, elektrochemische Bearbeitung, mechanische Bearbeitung, hydraulische Formung.

6. Verfahren nach einem der Ansprüche 1 bis 5, **dadurch gekennzeichnet, dass** man eine diskontinuierliche Erweiterung der Führungskanäle (16b, 16c, 17) des Führungsrohrs (8) realisiert, in Form von erweiterten Zonen, die zylindrische Wände umfassen, die nicht koaxial sind zu den Führungskanälen und die *Kübel (baquet)* genannt werden.

7. Verfahren nach einem der Ansprüche 1 bis 5, **dadurch gekennzeichnet, dass** man eine Erweiterung durch eine Bearbeitung in zu den Führungskanälen koaxialen diskontinuierlichen ringförmigen Zonen realisiert, in Form von Vertiefungen bzw. Auskehlungen.

8. Verfahren nach einem der Ansprüche 1 bis 5, **dadurch gekennzeichnet, dass** eine Erweiterung der Führungskanäle (16b, 16c) durch Realisierung wenigstens einer kontinuierlichen spiralförmigen Rille längs jedes kontinuierlichen Führungskanals (16b, 16c, 17) erfolgt.

9. Verfahren nach Anspruch 6, **dadurch gekennzeichnet, dass** man im Innern jedes der kontinuierlichen Führungskanäle (16b, 16c, 17) drei in axialer Richtung des kontinuierlichen Führungskanals (16b, 16c, 17) verteilte Erweiterungen realisiert.

10. Verfahren nach einem der Ansprüche 1 bis 9, **dadurch gekennzeichnet, dass** man gleichzeitig eine Gruppe von kontinuierlichen Führungskanälen (16b, 16c, 17) des Führungsrohrs (18) in wenigstens zwei Zonen längs eines jeden der kontinuierlichen Führungskanäle (16b, 16c, 17) erweitert.

11. Vorrichtung zur Wiederherstellung der Einfallzeit wenigstens eines Steuerstabs bzw. Steuerelements (8) zur Regelung der Reaktivität im Reaktorkem (2) eines leichtwassergekühlten Kernreaktors, der über dem Reaktorkern (2), gebildet durch aneinandergrenzende Brennelemente (3), die sich in einem Behälter (1) des Reaktors befinden und zur Führung von Absorberstäben (20) des Steuerelements vertikal angeordnete Führungsrohre (12) haben, obere Inneneinrichtungen (5) umfasst, die auf dem Oberteil der Brennelemente (3) des Reaktorkerns (2) auf einer oberen Platte (6) des Reaktorkerns in horizontaler Position ruhen und eine Gruppe vertikaler Führungsrohre (8) umfassen, von denen jedes zur Führung eines Steuerelements benutzt wird, gebildet durch ein Bündel zueinander paralleler Absorberstäbe (20, 20') und eine Vielzahl zueinander paralleler Führungskanäle (16b, 16c, 17) der Absorberstäbe (20, 20'), die axial mit den Führungsrohren (12) eines Brennelements (3) fluchten und einen Endteil nahe der oberen Platte des Reaktorkerns (6) umfassen, realisiert in Form eines kontinuierlichen Führungskanals (16b, 16c, 17),
**dadurch gekennzeichnet, dass** sie ein Bearbeitungswerkzeug (22) und Einrichtungen (23, 26) umfasst, um das Bearbeitungswerkzeug (22) zu positionieren und einzuführen ins Innere des kontinuierlichen Führungskanals (16b, 16c, 17) des Führungsrohrs (8) der oberen Inneneinrichtungen (5), und Femsteuerungseinrichtungen des Bearbeitungswerkzeugs (35) umfasst, um die Erweiterung der Führungskanäle (16b, 16c, 17) des Führungsrohrs (8) in wenigstens einer Zone des kontinuierlichen Führungskanals (16b, 16c, 17) zu realisieren.

12. Vorrichtung nach Anspruch 11, **dadurch gekennzeichnet, dass** das Bearbeitungswerkzeug (22) ein Elektroerosionswerkzeug ist, mit einem Rumpf (24), auf dessen Außenseite Führungsflügel (25a, 25b) von wenigstens einer Elektroerosionselektrode (35) befestigt sind, in einer radialen Richtung, senkrecht zu der Achse des rohrförmigen Rumpfes (24) des koaxial im Innern des Führungsrohrs angeordneten Werkzeugs (22), und dass die Steuerungseinrichtungen des Elektroerosionswerkzeugs (22) eine in der axialen Richtung des rohrförmigen Rumpfes (24) des Werkzeugs (22) eine verschiebbare Steuerstange (27) umfasst, an der wenigstens eine Einrichtung (31) zur radialen Verschiebung von wenigstens einer Elektroerosionselektrode (35) befestigt ist, um eine radiale Verschiebung der Elektroerosionselektrode (35) zu bewirken und den Elektroerosionsbearbeitungsvorschub bei der Realisierung der Erweiterung des kontinuierlichen Führungskanals (16b, 16c, 17) des Führungsrohrs (18) zu sichern.

13. Vorrichtung nach Anspruch 12, **dadurch gekennzeichnet, dass** wenigsten eine Elektroerosionselektrode (35) auf einem Elektrodenträger (33) befestigt ist, der eine geradlinige schräge Öffnung in Bezug auf die Achse des rohrförmigen Rumpfs (24) des Werkzeugs (22) umfasst, und dass die Betätigungseinrichtung (31) der Steuerstange (27) wenigstens eine in einer axialen Richtung des Werkzeugs (22) bewegliche Betätigungsachse (32) umfasst, die in einer Öffnung (40) des Elektrodenträgers (33) sitzt.

14. Vorrichtung nach einem der Ansprüche 12 und 13, **dadurch gekennzeichnet, dass** das Werkzeug (22) wenigstens zwei Gruppen (25) von Führungsflügeln (25a, 25b, 25c) umfasst, die in der axialen Richtung des rohrförmigen Rumpfes des Werkzeugs (22) voneinander beabstandet sind und von denen jede wenigstens eine in axialer Richtung verschiebbare Elektroerosionselektrode (35) umfasst.

15. Vorrichtung nach Anspruch 14, **dadurch gekennzeichnet, dass** jede der Gruppen (25) von Führungsflügeln (25a, 25b, 25c) des Werkzeugs vier Führungsflügel umfasst, die in axialen Ebenen des Werkzeugs (22) um 90° gegeneinander versetzt sind, wobei jeder der Führungsflügel (25a, 25b, 25c) jeder Gruppe (25) die Führung von zwei von einem selben Elektrodenträger (33) getragenen, zueinander parallelen Elektroden (35) ermöglicht, so dass man wenigstens acht kontinuierliche Führungskanäle (16b, 16c, 17) in wenigstens zwei Zonen und vorzugsweise drei Zonen gleichzeitig erweitem kann, verteilt über die Länge der kontinuierlichen Führungskanäle (16b, 16c, 17).

16. Vorrichtung nach einem der Ansprüche 11 bis 15, **dadurch gekennzeichnet, dass** sie zudem Einrichtungen (23, 26) umfasst, um das Werkzeug (22) im Innern des Beckens des Reaktors in einem beliebigen Führungskanal (8) der oberen Inneneinrichtungen (5), die auf einem Kontroll- und Reparaturstand in dem Becken des Reaktors angeordnet sind, zu positionieren.

17. Vorrichtung nach Anspruch 16, **dadurch gekennzeichnet, dass** die Positionierungseinrichtungen des Werkzeugs (22) in einem Führungsrohr (8) der oberen Inneneinrichtungen (5) einen auf dem Boden des Reaktorbeckens mobilen Hubwagen (23) und eine Hubeinrichtung (26) des Werkzeugs (22) in der Richtung der Vertikalachse (15) des Führungsrohrs (8) umfassen.
